# EUROPÄISCHE PATENTSCHRIFT

(11) **EP 0 584 307 B1**
(45) Veröffentlichungstag und Bekanntmachung des Hinweises auf die Patenterteilung: **15.05.1996**
(21) Anmeldenummer: 93903788.3
(22) Anmeldetag: 09.03.1993
(51) Int. Cl.: H01G 9/20, H01M 14/00

(54) **VERFAHREN ZUR HERSTELLUNG EINER PHOTOELEKTROCHEMISCHEN ZELLE, SOWIE EINE DEMGEMÄSS HERGESTELLTE ZELLE**
PROCESS FOR PRODUCING A PHOTOELECTROCHEMICAL CELL AND CELL THUS PRODUCED
PROCEDE DE FABRICATION D'UNE CELLULE PHOTOELECTROCHIMIQUE ET CELLULE REALISEE SELON LEDIT PROCEDE

(30) Priorität: 11.03.1992 DE 4207659
(43) Veröffentlichungstag der Anmeldung: 02.03.1994
(73) Patentinhaber: ECOLE POLYTECHNIQUE FEDERALE DE LAUSANNE, CH-1015 Lausanne (CH)
(72) Erfinder: KAY, Andreas, Gerhard, D-5000 Köln 80 (DE); GRAETZEL, Michael, CH-1025 St. Sulpice (CH); O'REGAN, Brian, Seattle, WA 98105 (US)
(74) Vertreter: Ganguillet, Cyril
(86) Internationale Anmeldenummer: CH9300060
(87) Internationale Veröffentlichungsnummer: WO9318532

(56) Entgegenhaltungen:
- EP-A- 0 333 641
- EP-A- 0 407 182
- WO-A-91/16719
- NATURE Bd. 353, Nr. 6346, 24. Oktober 1991, GB Seiten 737 - 740 B. O'REGAN & M. GRÄTZEL: "A low-cost, high-efficiency solar cell based on dye-sensitized colloidal TiO2 films"
- TECHNISCHE RUNDSCHAU Bd. 84, Nr. 9, 28. Februar 1992, Bern,CH;Seiten 30 - 35 E. HEINZELMANN:"Farbstoffe schlucken Sonnenlicht"
- PATENT ABSTRACTS OF JAPAN, Bd. 16, Nr. 227 (E-1207)26. Mai 1992;& JP-A-4042528

## Beschreibung

Die Erfindung bezieht sich auf ein Verfahren zur Herstellung einer photoelektrochemischen Zelle, sowie auf eine derartige Zelle.

Aus der EP 0 333 641 A1 ist es bekannt, daß Halbleiterelektrolytgrenzschichten photoelektrochemische Eigenschaften zeigen, die jenen der Schottky-Barrieren von Halbleiter/Metall-Grenzschichten ähnlich sind. Halbleiter mit geringem Abstand zwischen Energie- und Valenzband, bei denen die Ladungsträger des Halbleiters selbst mit Licht photoelektrisch angeregt werden, wie beispielsweise bei Silizium, Gallium-Arsenid und Kadmiumsulfid werden unter Lichtbestrahlung, bei der Verwendung von Elektrolyten photokorrosiv zersetzt. Die Empfindlichkeit, d.h. die photochemische Ausbeute für sichtbares Licht, also für Sonnenlicht, kann erhöht werden, indem auf die Oberfläche des Halbleiters sogenannte Chromophore, auch Sensibilisatoren oder Dyes genannt, chemisch an- oder eingelagert werden. Die beiden Funktionen der Lichtabsorption und der Ladungsträgertrennung sind bei diesen photoelektrochemischen Systemen getrennt. Die Lichtabsorption wird vom Chromophor im Oberflächenbereich übernommen und die Trennung der Ladungsträger erfolgt an der Grenzschicht Halbleiter/Chromophor. Als Elektrolyt für solche photoelektrochemischen Zellen sind beispielsweise Jodid, Bromid oder Hydrochinon oder andere Redoxsysteme geeignet. Als Elektrode werden Metalloxidhalbleiter verwendet. Hierfür sind besonders die Oxide der Übergangsmetalle sowie die Elemente der dritten Hauptgruppe und der vierten, fünften und sechsten Nebengruppe des Periodensystems der Elemente wie Titan, Zirkon, Hafnium, Strontium, Zink, Indium, Yttrium, Lanthan, Vanadium, Niob, Tantal, Chrom, Molybdän, Wolfram aber auch Oxide von Zink, Eisen, Nickel oder Silber, Perowskite oder Oxide von anderen Metallen der zweiten und dritten Hauptgruppe oder Mischoxide oder Oxidgemische dieser Metalle geeignet. Die Verwendung von Titandioxid als Elektrode hat sich als vorteilhaft erwiesen. Zellen mit Elektroden aus Titandioxid haben jedoch einen Wirkungsgrad, der unter dem Grenzwert für einen wirtschaftlichen Betrieb liegt.

Aus WO-A-9116719 ist ein Verfahren zur Herstellung einer photoelektrochemischen Zelle mit wenigstens einer porös ausgebildeten Elektrode, aus Titandioxidpartikeln, und einem Elektrolyt, vorzugsweise auf Basis des Redoxsystems Jod-Jodid, zwischen denen eine Dyeschicht angeordnet ist, bekannt.

Der Erfindung liegt die Aufgabe zugrunde, ein Verfahren zur Herstellung einer photoelektrochemischen Zelle mit einer Titandioxidelektrode aufzuzeigen, deren Wirkungsgrad gegenüber dem Stand der Technik verbessert ist, sowie eine Zelle mit diesen Eigenschaften.

Ein Verfahren zur Lösung dieser Aufgabe ist in Patentanspruch 1 offenbart.

Eine derartige photoelektrochemische Zelle ist in Patentanspruch 13 offenbart.

Mit Hilfe des erfindungsgemäßen Verfahrens ist es möglich, die wirksame Oberfläche der Elektrode um einen Faktor 700 gegenüber bekannten Zellen mit gleichen Abmessungen zu vergrößern. Hierdurch wird eine photoelektrochemische Zelle zur

Verfügung gestellt, deren Wirkungsgrad größer als 7 % ist. Zur Ausbildung der Elektrode wird eine kolloidale Titandioxiddispersion gebildet. Hierfür wird ein Titandioxidpulver verwendet, das durch Flammenhydrolyse aus Titantetrachlorid hergestellt wird. Die Dispersion wird aus dem Pulver unter Zugabe des Lösungsmittels hergestellt. Beim Vermischen von Pulver und Lösungsmittels wird das Pulver fortlaufend zerkleinert, bis eine viskose Paste ausgebildet ist. Zusätzlich werden der Dispersion Säuren, Basen und /oder Chelatbildner zugesetzt, um die Ausbildung einer elektrostatisch und sterisch stabilisierten Teilchendispersion sicherzustellen. Die Titandioxiddispersion kann direkt auf ein die Zelle begrenzendes, leitfähiges Glas aufgetragen werden. Erfindungsgemäß wird jedoch auf die Oberfläche des leitfähigen Glases zunächst eine Diffusionsbarriere in Form einer nichtporösen Titanoxidschicht aufgebracht. Um das Aufbringen der Dispersion zu erleichtern, wird ein anionisches, kationisches oder ein nichtionisches Detergens zugefügt. Anschließend wird die Titanoxiddispersion aufgebracht, und das Lösungsmittel mit Hilfe einer Wärmebehandlung entfernt. Um die wirksame Oberfläche der Elektrodenschicht weiter zu vergrößern, wird zusätzliches Titanoxid auf die Kolloidalpartikel der porösen Schicht aufgetragen. Diese Beschichtung wird so ausgeführt, daß auch die Innenflächen der Poren hierbei einen Überzug erhalten. Dies kann dadurch erfolgen, daß die poröse Titandioxidschicht mit einer Lösung, die eine hydrolysierbare Titanverbindung enthält, behandelt wird. Die Abscheidung des Titans kann elektrisch durchgeführt werden. Ferner kann die poröse Titandioxidschicht auch durch Hydrolyse, Oxygenolyse oder Pyrolyse mit einer gasförmigen Titanverbindung nachbeschichtet wird.

Die Erfindung wird nachfolgend anhand einer schematischen Zeichnung näher erläutert.

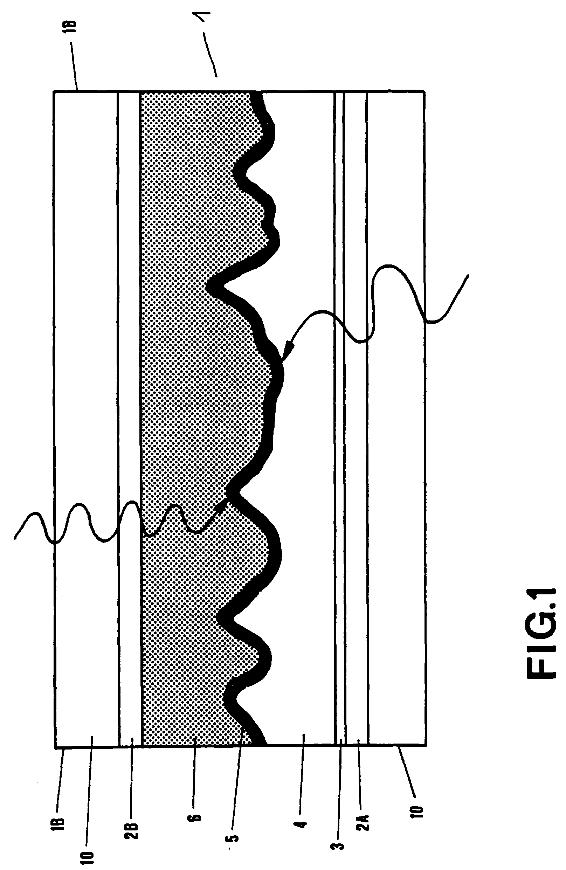

Die einzige zur Beschreibung gehörende Figur zeigt einen Längsschnitt durch die photoelektrochemische Zelle 1. Wie anhand der Figur zu sehen ist, ist die Zelle 1 aus mehreren Schichten 2A, 2B, 3, 4, 5 und 6 aufgebaut. Der Kern der Zelle 1 wird durch die als Elektrode 4 dienende Schicht, die Dyeschicht 5 und die Elektrolytschicht 6 gebildet. Erfindungsgemäß besteht die Elektrodenschicht 4 aus einer porösen Titandioxidschicht. Sie wird auf die aus leitfähigem Glas gefertigte Schicht 2A aufgetragen, wobei eine Diffusionsbarriere 3 in Form einer nichtporösen Titandioxidschicht dazwischen angeordnet ist. Diese Titanschicht 3 ist nicht porös. Sie verhindert, daß beim Tempern aus der leitfähigen Glasschicht Ionen herausdiffundieren und die poröse Titanoxidschicht 4 beeinflussen. Zur Herstellung dieser Diffusionsbarriere 3 kann eine Lösung eines Titanalkoxids in Alkohol dienen, die aufgetragen und nach Verdunstung des Lösungsmittels an feuchter Luft einen weniger als 0,1 µm dicken Titanoxidfilm hinterläßt. Die Diffusionsbarriere 3 kann jedoch auch durch Erwärmen einer wässrigen Titantetrachloridlösung oder bei etwa 500°C aus Titantetrachloriddampf enthaltender, trockener Luft abgeschieden werden. An die Schicht 4 schließt sich die Farbschicht 5 an. Sie wird aus einem der bekannten und eingangs erwähnten Werkstoffe hergestellt, und ebenfalls mit bekannten Mitteln ausgebildet. An die Schicht 5 schließt sich die Schicht 6 an, die durch einen flüssigen Elektrolyten gebildet wird. Diese Schicht 6 wird wiederum durch eine elektrisch leitende Glasschicht 2B begrenzt. An die beiden Glasschichten 2A und 2B schließen sich jeweils transparente Isolierschichten 10 an. Die seitlichen Begrenzungen 1B der Zelle 1 können ebenfalls durch solche Isolierschichten gebildet werden. Für die Fertigung der Zelle 1 wird zunächst auf die leitfähige Glasschicht 2 die Titandioxidschicht 3 aufgebracht. Für die Ausbildung der Schicht 4, die ebenfalls aus Titandioxid besteht, wird zunächst eine Dispersion hergestellt. Hierfür wird Titanoxidpulver verwendet, das durch Flammenhydrolyse aus Titantetrachlorid gewonnen wird. Das verwendete Pulver weist eine Teilchengröße von 15 nm auf. Die Dispersion wird durch Mischen des pulverförmigen Titandioxids mit einem Lösungsmittel gebildet. Als Lösungsmittel können Wasser, Alkohole, Polyalkohole, Ether, Carbonsäuren oder Amine verwendet werden. Lösungsmittel aus diesen Gruppen, die sich besonders gut eignen, sind Methanol, Ethanol, Ethylenglykol, Methoxyethanol, Milchsäure oder Triethanolamin. Durch den Zusatz von Salz-, Salpeter- oder Carbonsäure oder Natronlauge, Ammoniak oder Tetraalkylammoniumhydroxid kann die Dispersion elektrostatisch stabilisiert werden. Durch die Adsorption eines Chelatbildners in Form von Acetylaceton, Triethanolamin, Milchsäure, Polyalkoholen, Polymeren in Form von Polyethylenglykol, Polyethylenimin, Polyvinylalkohol, läßt sich die Dispersion sterisch stabilisieren, so daß auch nach langer Lagerzeit keine Ausflockung erfolgt. Die Konzentration und die damit verbundene Viskosität der zu bildenden Dispersion lassen sich durch einfaches Verdünnen mit den obengenannten Lösungsmitteln einstellen und an die jeweils gewählten Beschichtungsverfahren anpassen. Um die Benetzung der bereits ausgebildeten nicht porösen Titandioxidschicht 3 mit der kolloidalen Dispersion zu ermöglichen, und deren gleichmäßige Verteilung auf der Diffusionsbarriere 3 zu erleichtern, wird der Dispersion eine oberflächenaktive Substanz zugefügt. Hierfür wird vorzugsweise ein anionisches, kationisches oder ein nichtionisches Detergens zugesetzt. Bevorzugt wird hierfür Natriumoleat, Cetyltrimethylammoniumchlorid oder Alkylphenolpolyethylenglykolether verwendet. Für das Auftragen der Titandioxidschicht 4 können alle hierfür geeigneten Verfahren genutzt werden. Nach dem Auftragen der Titandioxidschicht 4 wird diese bei einer Temperatur von etwa 500°C getempert. Während dieser Temperaturbehandlung werden die Lösungsmittel verdampft und die Kolloidpartikel versintern zu einem fest haftenden Film. Nach dem Tempern der porösen Titandioxidschicht 4 wird diese einer Nachbehandlung unterzogen, bei der zumindest auf den Innenflächen der Poren nochmals Titandioxid abgeschieden wird, um die Oberflächenwirkung zu vergrößern. Durch Abscheidung weiteren Titandioxids auf den Kolloidpartikeln erhöht sich sowohl die Reinheit und damit die Aktivität der Katalysatoroberfläche als auch deren Rauhigkeit und somit das Ausmaß der wirksamen Oberfläche. Für diese Nachbehandlung wird die poröse Titanoxidschicht 4 in eine wässrige Titanchloridlösung getaucht, aus der sich Titanoxid auf den als Keimen wirkenden Kolloidpartikeln abscheidet. Erfindungsgemäß erfolgt die Abscheidung elektrisch, indem eine Lösung aus 0,75% TiCl₃ und 0,5% HCl gebildet wird. Durch Zugabe von NH₄OH wird die Lösung auf einen pH-Wert von 2.1 eingestellt. Die poröse Titandioxidschicht 4 wird zusammen mit einer Platinelektrode (hier nicht dargestellt) in dieser Lösung angeordnet, und zusammen mit dieser so an eine Spannungsquelle angeschlossen, daß eine Stromdichte von 30µA/cm2 an der Titandioxidelektrode 4 anliegt. Die Abscheidung von weiterem Titandioxid auf den Kolloidalpartikeln der Schicht 4 erfolgt etwa 2 Stunden lang. Anschießend wird die Schicht 4 mit HCl, pH-Wert 1.5 und danach mit Wasser abgespült und anschließend einer Wärmebehandlung zwischen 400 und 420°C unterzogen. Die Nachbehandlung kann auch in einem mit Titantetrachlorid beladenen, trockenen Luftstrom bei 500°C durchgeführt werden.

## Patentansprüche

1. Verfahren zur Herstellung einer photoelektrochemischen Zelle (1) mit wenigstens einer Elektrode (4) und einem Elektrolyt (6), zwischen denen eine Dyeschicht (5) angeordnet ist, wobei für die Begrenzung von Elektrode (4) und Elektrolyt (6) nach außen jeweils eine transparente elektrisch leitende Schicht (2A, 2B) vorgesehen ist, und wobei die Elektrode (4) zur Vergrößerung ihrer wirksamen Oberfläche porös ausgebildet wird, dadurch gekennzeichnet, daß zwischen der transparenten elektrisch leitenden Schicht (2A) und der porösen Elektrode (4) eine Diffussionsbarriere (3) angeordnet wird.

2. Verfahren nach Anspruch 1, dadurch gekennzeichnet, daß zur Ausbildung der Elektrode (4) eine Dispersion aus Titandioxidpulver und einem Lösungsmittel gebildet wird.

3. Verfahren nach Anspruch 2, dadurch gekennzeichnet, daß zur Ausbildung der Elektrode (4) Titandioxidpulver mit einer Teilchengröße von 15 nm verwendet wird, das mittels Flammenhydrolyse aus Titantetrachlorid hergestellt wird.

4. Verfahren nach Anspruch 2 oder 3, dadurch gekennzeichnet, daß zur Bildung der Dispersion als Lösungsmittel Wasser, Alkohole, Polyalkohole, Ether, Carbonsäuren oder Amine verwendet werden.

5. verfahren nach Anspruch 4, dadurch gekennzeichnet, daß als Lösungsmittel Methanol, Ethanol, Ethylenglykol, Glyzerin, Metoxyethanol, Milchsäure oder Triethanolamin verwendet werden.

6. Verfahren nach einem der Ansprüche 2 bis 5, dadurch gekennzeichnet, daß zur Ausbildung einer elektrostatisch und/oder sterisch stabilisierten Dispersion Zusätze in Form von Säuren, Basen oder Chelatbildnern der Dispersion beigemischt werden.

7. Verfahren nach Anspruch 6, dadurch gekennzeichnet, daß der Dispersion zur Erzielung einer elektrostatisch Stabilität Salz-, Salpeter- oder Carbonsäure bzw. Natronlauge, Ammoniak oder Tetraalkylammoniumhydroxid beigemischt werden, und daß durch Adsorption von Acetylaceton, Triethanolamin, Milchsäure, Polyalkoholen, Polymeren wie Polyethenglykol, Polyethylenimin oder Polyvinylalkohol die sterische Stabilisierung der Dispersion bewirkt wird.

8. Verfahren nach einem der Ansprüche 2 bis 7, daß die Dispersion für eine gleichmäßige Ausbreitung auf der Diffusionsbarriere (3) mit einem anionischen, kationischen oder nichtionischen Detergens in Form von Natriumoleat, Cetyltrimethylammoniumchlorid oder Alkylphenolpolyethylenglykolether versetzt wird.

9. Verfahren nach einem der Ansprüche 2 bis 8, dadurch gekennzeichnet, daß die aus der Dispersion aufgetragene Elektrodenschicht (4) bei einer Temperatur von 500°C getempert und dabei die Lösungsmittel verdampft und die Kolloidpartikel zu einem festen Film versintert werden.

10. Verfahren nach einem der Ansprüche 1 bis 9, dadurch gekennzeichnet, daß auf den Kolloidalpartikeln der Elektrode (4) zur Vergrößerung der wirksamen Oberfläche weiteres Titandioxid angelagert wird.

11. Verfahren nach Anspruch 10, dadurch gekennzeichnet, daß die Elektrode (4) zur Anlagerung von weiterem Titandioxid auf den Kolloidpartikeln in eine wässrige Titantetrachloridlösung getaucht oder einem mit Titantetrachlorid beladenen trockenen Luftstrom bei einer Temperatur von 500°C ausgesetzt wird.

12. Verfahren nach Anspruch 10, dadurch gekennzeichnet, daß aus 0,75% TiCl₃ und 0,5% HCl eine Lösung gebildet und diese durch Zugabe von NH₄OH auf einen pH-Wert von 2.1 eingestellt wird, daß die poröse Titandioxidschicht (4) zusammen mit einer Platinelektrode in dieser Lösung angeordnet und so mit der Platinelektrode an eine Spannungsquelle angeschlossen wird, daß eine Stromdichte von 30µA/cm2 an der Titandioxidelektrode anliegt, daß die Abscheidung von Titandioxid auf den Kolloidalpartikeln der Titandioxidschicht (4) etwa 2 Stunden lang erfolgt, und daß die Titandiaxidschicht (4) anschließend mit HCl mit einem pH-Wert von 1.5 und danach mit Wasser abgespült und anschließend einer Wärmebehandlung zwichen 400 und 420°C unterzogen wird.

13. Photoelektrochemische Zelle (1) mit wenigstens einer Elektrode (4) und einem Elektrolyten (6), die als Schichten ausgebildet sind und zwischen denen eine Dyeschicht (5) angeordnet ist, wobei für die Begrenzung von Elektrode (4) und Elektrolyt (6) nach außen jeweils eine transparente, elektrisch leitende Schicht (2A, 2B) vorgesehen ist, und wobei die Elektrode (4) zur Vergrößerung ihrer wirksamen Oberfläche porös ausgebildet ist, dadurch gekennzeichnet, dass zwischen der porösen Elektrode (4) und der transparenten, elektrisch leitenden Schicht (2A) eine Diffusionsbarriere (3) vorgesehen ist.

## Claims

1. A method for the manufacture of a photoelectrochemical cell (1) with at least one electrode (4) and an electrolyte (6) between which is arranged a dye layer (5), the outward delimitation of the electrode (4) and of the electrolyte (6) as well being provided by a transparent, electrically conductive layer (2A, 2B), the electrode (4) being made porous to increase its effective surface, characterised in that between the transparent, electrically conductive layer (2A) and the porous electrode (4) is arranged a diffusion barrier (3).

2. A method according to claim 1, characterised in that a dispersion of titanium dioxide powder and of a solvent is prepared for the formation of the electrode (4).

3. A method according to claim 2, characterised in that, for the formation of the electrode (4), titanium dioxide powder, with a particle size of 15 nm and produced by flame hydrolysis from titanium tetrachloride, is used.

4. A method according to claim 2 or 3, characterised in that water, alcohols, polyalcohols, ether, carboxylic acids or amines are used as a solvent for the preparation of the dispersion.

5. A method according to claim 4, characterised in that methanol, ethanol, ethylene glycol, glycerol, methoxyethanol, lactic acid or triethanol amine are used as a solvent.

6. A method according to any one of claims 1 to 5, characterised in that, for the preparation of an electrostatically and/or sterically stabilized dispersion, admixtures in the form of acids, bases or chelating agents are added to the dispersion.

7. A method according to claim 6, characterised in that hydrochloric acid, nitric acid or carboxylic acid or sodium hydroxide solution, ammonia or tetraalkyl ammonium hydroxide is added to the dispersion to obtain electrostatic stability, and that the steric stabilization of the dispersion is achieved by adsorption of acetylacetone, triethanolamine, lactic acid, polyalcohols, polymers such as polyethylene glycol, polyethylene imine or polyvinyl alcohol.

8. A method according to any one of claims 2 to 7, characterised in that, in order to obtain a uniform spreading on the diffusion barrier (3), anionic, cationic or non-ionic detergent in the form of sodium oleate, cetyl trimethyl ammonium chloride or alkyl phenol polyethylene glycolether is added to the dispersion.

9. A method according to any one of claims 2 to 8, characterised in that the electrode layer (4) deposited from the dispersion, is annealed at a temperature of 500°C whereby the solvent evaporates and the colloid particles are sintered to a strong film.

10. A method according to any one of claims 1 to 9, characterised in that further titanium dioxide is deposited on the colloidal particles of the electrode (4) to increase the effective surface.

11. A method according to claim 10, characterised in that, in order to deposit further titanium dioxide on the colloid particles, the electrode (4) is immersed in an aqueous solution of titanium tetrachloride or is exposed, at a temperature of 500°C, to a stream of dry air loaded with titanium tetrachloride.

12. A method according to claim 10, characterised in that a solution is prepared from 0.75 % of TiCl₃ and 0.5 % of HCl and is set, by the addition of NH₄OH, to a pH value of 2.1, that the porous titanium dioxide layer (4) is positioned, together with a platinum electrode, in this solution and is so connected with the platinum electrode to a voltage source, that a current density of 30 µA/cm is applied to the titanium dioxide electrode, that the deposition of titanium dioxide on the colloidal particles of the titanium dioxide layer (4) lasts for about 2 hours, and that the titanium dioxide layer (4) is subsequently rinsed with HCl having a pH value of 1.5 and then with water, and finally is subjected to a thermal treatment at a temperature of between 400 and 420°C.

13. Photoelectrochemical cell (1) with at least one electrode (4) and one electrolyte (6), which are formed as layers and between which is arranged a dye layer (5), the outward delimitation of the electrode (4) and of the electrolyte (6) as well being provided by a transparent, electrically conductive layer (2A, 2B), the electrode (4) being made porous in order to increase its effective surface, characterised in that between the porous electrode (4) and the transparent, electrically conductive layer (2A) is provided a diffusion barrier (3).

## Revendications

1. Procédé de fabrication d'une cellule photoélectrochimique (1) avec au moins une électrode (4) et un électrolyte (6) entre lesquels est disposée une couche de colorant (5), dans laquelle la délimitation vers l'extérieur de l'électrode (4) comme de l'électrolyte (6) est réalisée par une couche transparente électriquement conductrice (2A, 2B), et dans laquelle l'électrode (4) est réalisée sous forme poreuse pour augmenter sa surface active, caractérisé en ce qu'une barrière de diffusion (3) est disposée entre la couche transparente électriquement conductrice (2A) et l'électrode poreuse (4).

2. Procédé selon la revendication 1, caractérisé en ce que, pour constituer l'électrode (4), on forme une dispersion de poudre de bioxyde de titane et d'un solvant.

3. Procédé selon la revendication 2, caractérisé en ce que, pour constituer l'électrode (4), on utilise de la poudre de bioxyde de titane ayant une dimension de particules de 15 nm, fabriquée par hydrolyse à la flamme à partir de tétrachlorure de titane.

4. Procédé selon la revendication 2 ou 3, caractérisé en ce que, pour former la dispersion, on utilise, comme solvant, de l'eau, des alcools, des polyalcools, des éthers, des acides carboxyliques ou des amines.

5. Procédé selon la revendication 4, caractérisé en ce que l'on utilise, comme solvant, le méthanol, l'éthanol, l'éthylèneglycol, la glycérine, le méthoxyéthanol, l'acide lactique ou la triéthanolamine.

6. Procédé selon l'une des revendications 2 à 5, caractérisé en ce que, pour la formation d'une dispersion stabilisée électrostatiquement et/ou stériquement, on ajoute à la dispersion des additifs sous forme d'acides, bases ou agents chélatants.

7. Procédé selon la revendication 6, caractérisé en ce que l'on ajoute à la dispersion, pour obtenir une stabilité électrostatique, de l'acide chlorhydrique, de l'acide nitrique ou un acide carboxylique ou bien de la lessive de soude, de l'ammoniaque ou de l'hydroxyde de tétraalkylammonium, et en ce que l'on provoque la stabilisation stérique de la dispersion par adsorption d'acétylacétone, de triéthanolamine, d'acide lactique, de polyalcools, de polymères tels que le polyéthylène-glycol, la polyéthylène-imine ou l'alcool polyvinylique.

8. Procédé selon l'une des revendication 2 à 7, caractérisé en ce que la dispersion est appliquée, pour un étalement uniforme, sur la barrière de diffusion (3), avec un détergent anionique, cationique ou non-ionique sous forme d'oléate de sodium, de chlorure de cétyltriméthylammonium ou d'éther d'alkylphénolpolyéthylèneglycol.

9. Procédé selon l'une des revendications 2 à 8, caractérisé en ce que l'on recuit à une température de 500°C, la couche d'électrode (4) formée à partir de la dispersion, de façon à vaporiser le solvant et fritter les particules de colloïde en formant une pellicule solide.

10. Procédé selon l'une des revendications 1 à 9, caractérisé en ce que l'on applique encore du bioxyde de titane sur les particules colloïdales de l'électrode (4) afin d'augmenter la surface active.

11. Procédé selon la revendication 10, caractérisé en ce que, pour le dépôt de bioxyde de titane supplémentaire sur les particules de colloïde, on trempe l'électrode (4) dans une solution aqueuse de tétrachlorure de titane, ou on l'expose à un courant d'air sec, chargé de tétrachlorure de titane, à une température de 500°C.

12. Procédé selon la revendication 10, caractérisé en ce que l'on prépare une solution à 0,75 % TiCl₃ et 0,5 % HCl et que l'on ajuste le pH de cette solution à une valeur de 2.1, par adjonction de NH₄OH, que l'on dispose la couche poreuse (4) de bioxyde de titane, de même qu'une électrode de platine, dans cette solution, et qu'on la connecte ainsi, avec l'électrode de platine, à une source de tension, que l'on applique une densité de courant de 30 µA/cm à l'électrode de bioxyde de titane, que l'on laisse ensuite la précipitation de bioxyde de titane se produire, pendant environ 2 heures, sur les particules colloïdales de la couche de bioxyde de titane (4), et, ensuite, que l'on rince la couche de bioxyde de titane (4) avec HCl de pH 1.5, puis avec de l'eau, et qu'on la soumet finalement à un traitement thermique entre 400 et 420°C.

13. Cellule photoélectrochimique (1) avec au moins une électrode (4) et un électrolyte (6) agencés sous forme de couches et entre lesquels est disposée une couche de colorant (5), dans laquelle la délimitation vers l'extérieur de l'électrode (4) comme de l'électrolyte (6) est réalisée par une couche transparente électriquement conductrice (2A, 2B) et dans laquelle l'électrode (4) est réalisée sous forme poreuse pour augmenter sa surface active, caractérisée en ce qu'une barrière de diffusion (3) est disposée entre l'électrode poreuse (4) et la couche transparente électriquement conductrice (2A).
